# EUROPÄISCHE PATENTSCHRIFT

(11) **EP 1 285 799 B1**
(45) Veröffentlichungstag und Bekanntmachung des Hinweises auf die Patenterteilung: **22.04.2009**
(21) Anmeldenummer: 02016459.6
(22) Anmeldetag: 23.07.2002
(51) Int. Cl.: B60J 7/12

(54) **Cabriolet-Fahrzeug mit einem zumindest bereichsweise flexiblen Dach**
Convertible vehicle with an at least locally flexible roof
Véhicule convertible avec au minimum un toit fléxible extensible

(30) Priorität: 22.08.2001 DE 10140234
(43) Veröffentlichungstag der Anmeldung: 26.02.2003
(73) Patentinhaber: Wilhelm Karmann GmbH, 49084 Osnabrück (DE)
(72) Erfinder: Heselhaus, Udo, 49479 Ibbenbühren (DE)

(56) Entgegenhaltungen:
- EP-A- 0 592 109
- DE-C- 19 956 482
- GB-A- 496 589
- GB-A- 752 282
- US-A- 3 473 842
- US-A- 4 840 421
- US-A- 5 026 110

## Beschreibung

Die Erfindung betrifft ein Cabriolet-Fahrzeug mit einem im rückwärtigen Fahrzeugbereich ablegbaren Dach nach dem Oberbegriff des Anspruchs 1, wie aus Dokument US 3 473 842 bekannt ist.

Es ist bekannt, Cabriolet-Fahrzeuge mit flexiblen Dächern oder flexiblen Dachbereichen derart auszubilden, daß die flexiblen Dachbereiche textile Bespannungen enthalten, die sich zwischen seitlichen, in Fahrzeuglängsrichtung verlaufenden Rahmenteilen, erstrecken. Untergreifend werden diese Bespannungen von quer zwischen den seitlichen Rahmenteilen angeordneten Spriegeln unterstützt. Zum Öffnen derartiger Dächer werden die Rahmenteile um horizontale und in Fahrzeugquerrichtung verlaufende Schwenkachsen aufgeschwenkt, wobei die einzelnen, jeweils zwischen seitlichen Rahmenteilen erstreckten Abschnitte der Bespannung aufeinandergelegt werden. Die Spannung in dem flexiblen Bezug wird durch das Lösen eines Dachverschlusses erreicht, wodurch das Einfalten ermöglicht wird. Die Querspriegel, die häufig eine nach oben gewölbte Gestalt des Verdecks sichern, geraten durch das Einfalten häufig in Kollision miteinander, so daß spezielle Geometrien für deren Anordnung gefunden werden müssen. Auch wenn die Spriegel so gelegt sind, daß sie beim Einfalten sich hintereinander mit hinreichendem Abstand ablegen, läßt sich die Dicke des entstehenden Pakets von parallel zueinander liegenden Dachteilen nicht beliebig vermindern, da die Bespannung jeweils über die Spriegel läuft und zwischen diesen aufgrund der verbleibenden Spannung von einem Spriegel eines anderen Dachteils nicht beliebig weit eingedrückt werden kann. Zudem blockieren sich in abgelegtem Zustand auch die seitlichen Rahmenteile, die häufig nach außen gewölbt sind, um eine kontinuierliche Dachlinie bei geschlossenem Dach zu gewährleisten. Im abgelegten Zustand liegen dann die nach außen gewölbten Abschnitte aufeinander. Auch die Länge dieses Pakets ist durch die Länge der Rahmenteile bestimmt und nimmt mit zunehmender Innenraumlänge des Fahrzeugs zu. Mehr als drei aufeinander liegende Abschnitte lassen sich dabei in der Regel nicht verwirklichen, da ansonsten das Paket mit dem zusammengefalteten Dach eine zu große Dikkenerstreckung bekäme.

Der Erfindung liegt das Problem zugrunde, ein Cabriolet-Fahrzeug zu schaffen, daß ein möglichst geringes Packmaß des geöffneten Verdecks erlaubt.

Die Erfindung löst dieses Problem durch ein Cabriolet-Fahrzeug mit den Merkmalen des Anspruchs 1. Vorteilhafte Ausgestaltungen sind den hiervon abhängigen Ansprüchen 2 bis 13 zu entnehmen.

Mit dem erfindungsgemäßen Cabriolet-Fahrzeug ist durch die Längenverkürzung des flexiblen Dachbereichs zu seiner Öffnung eine Verminderung seiner Längenerstreckung im abgelegten Zustand ermöglicht. Gleichzeitig brauchen keine Dachteile um horizontale Schwenkachsen übereinander gefaltet zu werden. Dadurch ist vermieden, daß sich mehrere Spriegel übereinanderlegen müssen, was die eingangs beschriebenen Limitierungen der Minimaldicke des Dachpakets im abgelegten Zustand mit sich bringen würde. Somit ist neben der Verkürzung durch die Erfindung auch eine Dickenverminderung des abgelegten Pakets erreicht. Dadurch wächst der verbleibende Kofferraum sowohl in der Länge als auch in der Höhe.

Wenn für die Bewirkung der Verkürzung seitliche Rahmenteile gegeneinander um vertikale Achsen einfaltbar sind, kann die Verkürzung einfach und unter größtmöglicher Nutzung ohnehin vorhandener Bauteile stattfinden.

Die erfindungsgemäße Ausbildung mit einem starren rückwärtigen Dachteil ermöglicht eine einfache Dachverkürzung, da dann nur der Teil eingefaltet werden muß, der im geschlossenen Zustand eine im wesentlichen horizontale Fläche ausbildet. Somit kann die Verkürzungsbewegung des flexiblen Dachbereichs auf eine im wesentlichen zweidimensionale Bewegungsebene beschränkt werden.

Erfindungsgemäß wird der gesamte flexible Dachbereich unter dem starren rückwärtigen Dachteil abgelegt, so daß dieser die Länge des Dachpakets im abgelegten Zustand begrenzt und gleichzeitig einen Schutz ausbildet. Vorteilhafterweise kann das starre rückwärtige Dachteil im abgelegten Zustand nach oben weisen, um mit seiner Außenwölbung nicht in den Kofferraum hineinzuragen.

Weitere Vorteile und Einzelheiten der Erfindung ergeben sich aus einem nachfolgend beschriebenen und in der Zeichnung dargestellten Ausführungsbeispiel des Gegenstandes der Erfindung.

In der Zeichnung zeigt:
- Fig. 1: eine perspektivische Ansicht von schräg hinten auf einen mittleren Teilbereich eines erfindungsgemäßen Cabriolet-Fahrzeugs bei geschlossenem Dach,
- Fig. 2: eine Seitenansicht auf das geschlossene Dach aus Richtung des Pfeils II in Fig. 1,
- Fig. 3: eine ähnliche Ansicht wie Fig. 2 während der beginnenden Öffnung des Daches,
- Fig. 4: eine Seitenansicht auf das sich öffnende Dach aus Richtung des Pfeils IV in Fig. 3,
- Fig. 5: eine ähnliche Ansicht wie Fig. 3 bei weiter fortschreitender Dachöffnung,
- Fig. 6: eine Seitenansicht auf das sich weiter öffnende Dach aus Richtung des Pfeils VI in Fig. 5,
- Fig. 7: eine ähnliche Ansicht wie Fig. 5 bei weiterer Dachöffnung,
- Fig. 8: eine Seitenansicht auf das sich weiter öffnende Dach aus Richtung des Pfeils VIII in Fig. 7,
- Fig. 9: eine ähnliche Ansicht wie Fig. 7 bei weiterer Dachöffnung,
- Fig. 10: eine Seitenansicht auf das sich weiter öffnende Dach aus Richtung des Pfeils X in Fig. 9,
- Fig. 11: eine ähnliche Ansicht wie Fig. 9 bei weiterer Dachöffnung,
- Fig. 12: eine Seitenansicht auf das sich weiter öffnende Dach aus Richtung des Pfeils XII in Fig. 11,
- Fig. 13: eine ähnliche Ansicht wie Fig. 11 bei weiterer Dachöffnung,
- Fig. 14: eine Seitenansicht auf das sich weiter öffnende Dach aus Richtung des Pfeils XIV in Fig. 13,
- Fig. 15: eine ähnliche Ansicht wie Fig. 13 bei vollständiger Dachöffnung,
- Fig. 16: eine Seitenansicht auf das sich vollständig geöffnete Dach aus Richtung des Pfeils XVI in Fig. 15.

Das Cabriolet-Fahrzeug 1 gemäß dem dargestellten Ausführungsbeispiel umfaßt ein Dach mit einem festen hinteren Dachteil 2 und einen daran in Fahrtrichtung F anschließenden flexiblen Dachbereich 3.

Dieser umfaßt den beiden Fahrzeugseiten jeweils zugeordnete seitliche Rahmenteile 4, 5, die im geschlossenen Zustand des Daches fluchtend hintereinander liegen. Dabei erstreckt sich das erste Rahmenteil 4 von einem Windschutzscheibenrahmen 6 oder einem festen vorderen Querende 36 des Daches bis zu einer zwischen den Rahmenteilen 4, 5 liegenden Trennfuge 7. Das hintere Rahmenteil erstreckt sich von der Trennfuge 7 bis zum hinteren Dachteil 2. Auch eine andere Anzahl von seitlichen Rahmenteilen ist möglich. Die Rahmenteile sind durch Querspriegel 9, 10, 11 miteinander verbunden. Über diese ist ein insgesamt mit 12 bezeichneter Dachbezug gespannt. Der hintere Spriegel 11 ist im geschlossenen Zustand unmittelbar vor dem hinteren Dachteil 2 gehalten und bildet eine Art Spannleiste für den rückseitigen Abschluß 13 des Dachbezugs 12. Zudem ist ein vorderes Synchronisationsgestänge 8 vorgesehen, das wie die Spriegel 9, 10, 11 den Dachbezug 12 quer unterläuft. Damit kann bei der unten beschriebenen Dachverkürzung eine gleichmäßige Bewegung der beiden Dachseiten parallel zur Fahrzeuglängsrichtung erreicht werden.

Im Bereich des hinteren Spriegels 11 ist an jeder Fahrzeugseite je ein Antriebsorgan 14 - hier als Hydraulikzylinder ausgebildet- angeordnet, der sich von dem Spriegel 11 bis zu einem Gelenk 15 erstreckt, das im Bereich der Trennfuge 7 angeordnet ist und um zumindest eine vertikale Achse 16 aufschwenkbar ist. Das Antriebsorgan 14 ist von dem Bezug 12 überdeckt. Sein vorderes Ende ist weiter in Richtung einer vertikalen Fahrzeuglängsmittelebene verlagert als sein rückwärtiges Ende. Das Gelenk 15 ist mit den seitlichen Rahmenteilen 4, 5 im Nahbereich der Teilungsfuge 7 verbunden. Das vordere Rahmenteil 4 ist im Verlauf seiner Längserstreckung in einem von der Trennfuge 7 entfernten Bereich an dem Gelenk 17 geteilt in den bezüglich einer vertikalen Fahrzeuglängsebene nicht schwenkbaren vorderen Abschnitt 4a und den demgegenüber um eine vertikale Achse 18 des Gelenks 17 in Richtung der vertikalen Fahrzeuglängsmittelebene 19 einschwenkbaren Abschnitt 4b. Das hintere Rahmenteil 5 ist im Verlauf seiner Längserstreckung ebenfalls in einem von der Trennfuge 7 entfernten Bereich an dem Gelenk 20 geteilt in den bezüglich einer vertikalen Fahrzeuglängsebene nicht schwenkbaren hinteren Abschnitt 5a und einen demgegenüber um eine vertikale Achse 21 des Gelenks 20 in Richtung der vertikalen Fahrzeuglängsmittelebene 19 einschwenkbaren Abschnitt 5b.

Das hintere Dachteil 2 und das flexible Dachteil 3 bilden in jeder Phase ihrer Bewegung eine zusammenhängende Dachaußenfläche aus, die nicht - etwa im Bereich des Übergangs vom Dachteil 2 zum Dachbereich 3 - durch eine offene Fuge unterbrochen ist. Dabei kann der textile Bezug 12 entweder an dem festen Dachteil 2 angehängt sein oder diesen mit übergreifen.

Hier ist eine Ausführung dargestellt, in der das hintere Dachteil 2 insgesamt als Glas- oder Kunststoffkuppel ausgebildet ist und an seiner vorderen Kante 22 mit dem Bezug 12 verbunden ist, ohne von diesem übergriffen zu sein. Um die Innenraumaufheizung zu vermindern, kann das kuppelartige hintere Dachteil dabei außerhalb eines mittleren Durchsichtsbereich mit einer dunklen, lichtund/oder wärmeabsorbierenden Beschichtung versehen sein.

Das hintere Dachteil 2 ist über ein insgesamt mit 23 bezeichnetes Gestänge an jeder Fahrzeugseite mit einem Hauptlager 24 verbunden, um das herum das hintere Dachteil 2 um eine in Fahrzeugquerrichtung weisende Horizontalachse aufgeschwenkt werden kann. Das Gestänge 23 umfaßt zwei Antriebsorgane 25, 26. Das Antriebsorgan 25 ist kolbenstangenseitig über einen Hebel Gh mit einem Gelenkparallelogramm G verbunden. Dieses umfaßt die vier Teile G1, G2, G3 und G4, die an den Schwenkgelenken GS1, GS2, GS3 und GS4 miteinander verbunden sind. Die Schwenkachsen dieser Gelenke verlaufen horizontal und in Fahrzeugquerrichtung. Mit den Gelenken GS3 und GS4 greift das Viergelenk G am rückwärtigen Ende des vorderen Dachteils an, wodurch mit der Betätigung dieses Viergelenks G eine Relativbewegung zwischen den Dachteilen 2 und 3 bewirkbar ist.

Das Antriebsorgan 26 greift hingegen kolbenstangenseitig an einem ersten Lenker H1 des zweiten Gelenkparallelogramms H an. Der Lenker H1 erstreckt sich darin parallel zum Lenker H3. Dazwischen liegen die Lenker H2 und H4, über die Gelenke HS1 bzw. HS 2 mit dem Lenker H1 und über die Gelenke HS 3 bzw. HS 4 mit dem Lenker H3 verbunden sind. Im Ausführungsbeispiel sind die Antriebsorgane 25, 26 derart angeordnet, daß mit deren Hilfe eine nahezu vertikale Hubbewegung des Dachteils 2 vermittelbar ist. Die Relativbewegung des vorderen Dachteils 3 kann in einer unbeweglichen Stellung des hinteren Dachteils 2 stattfinden.

Zudem ist noch ein drittes Antriebsorgan 27 vorgesehen, das an einem Haupthebel 28 angreift und dadurch eine Schwenkbewegung mit einem großen Schwenkwinkel um das Hauptlager 24 bewirken kann.

In geschlossener Stellung des Daches liegt das hintere Dachteil 2 mit seiner rückwärtigen Kante 35 auf einem Deckelteil 29 auf. Dieser dient in Doppelfunktion sowohl zum Abdecken des Verdeckkastens als auch des Kofferraums. Entsprechend kann das Deckelteil 29 in einem ersten Sinne zur Freigabe einer Durchtrittsöffnung für das Dach und in einem zweiten Sinne zur Freigabe einer Beladeöffnung für den Kofferraum geöffnet werden. Das Deckelteil ist hierfür zweiteilig ausgebildet, wobei der vordere Teil 30 an einer Querfuge 31 an den hinteren Teil 32 anschließt. Der vordere Teil 30 ist mit seinem in Fahrtrichtung F vorderen Ende in einer Längsführungskulisse beweglich gehalten und im Bereich der Querfuge 31 mit dem hinteren Teil 32 schwenkbar verbunden. Der hintere Teil 32 ist an seiner rückwärtigen Kante schwenkbar an der Fahrzeugkarosserie 33 angelenkt. Die Schwenkbewegung des hinteren Teils 32 des Deckelteils 29 ist durch zumindest ein im Bereich der rückwärtigen Anlenkung des hinteren Teils 32 gelegenen Antriebsorgan bewirkbar.

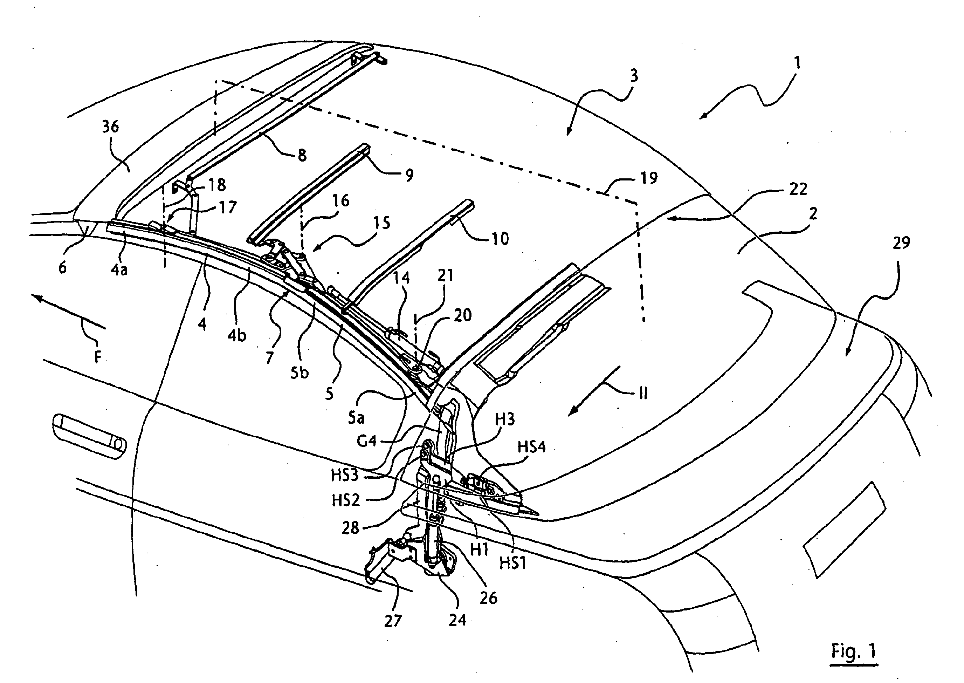

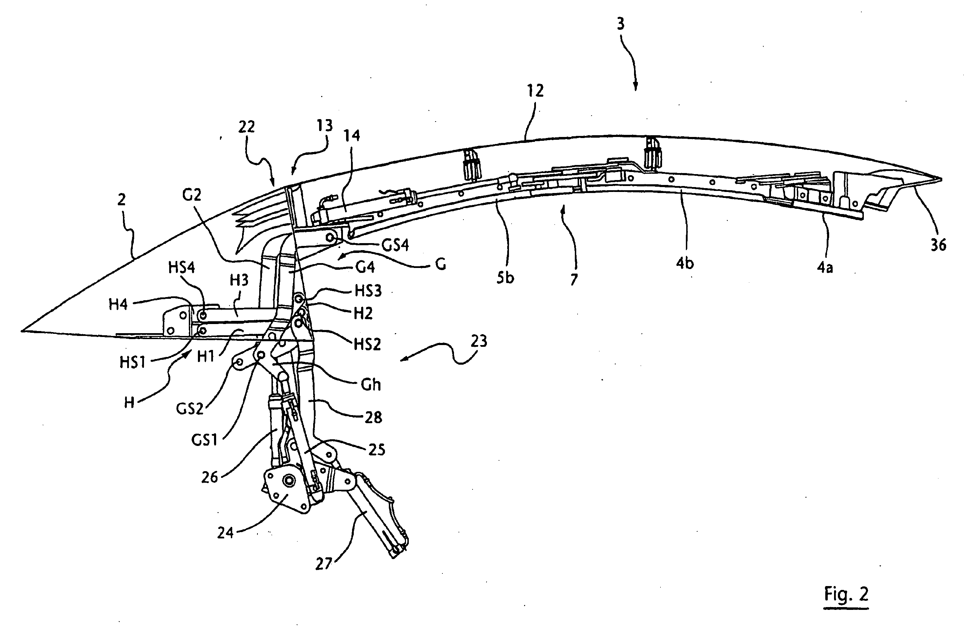

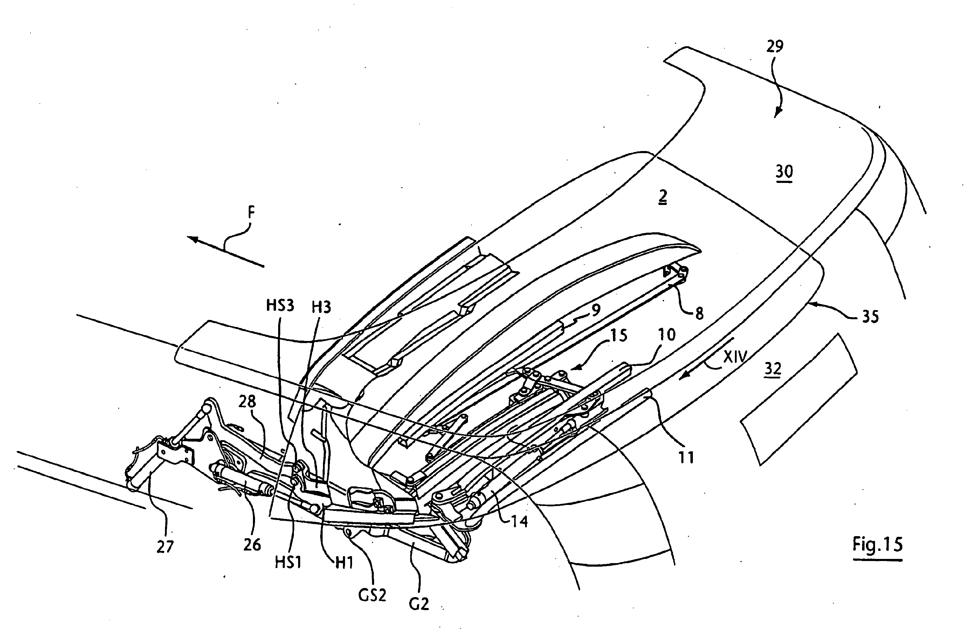

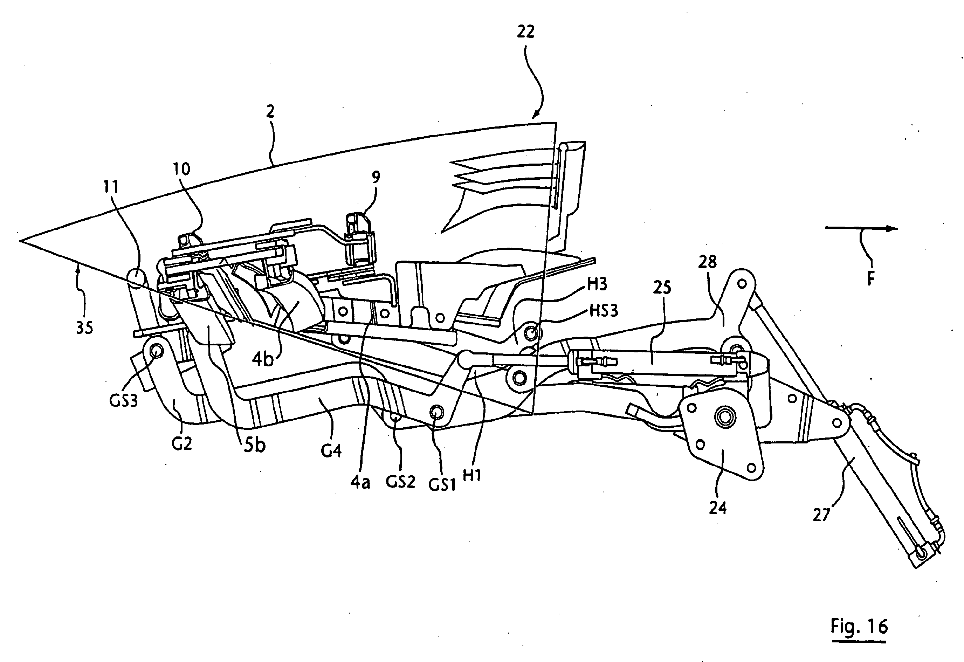

Um das Dach aus seiner geschlossenen Stellung gemäß den Figuren 1 und 2 in die Offenstellung nach den Figuren 15 und 16 zu überführen, findet der folgende Ablauf statt:

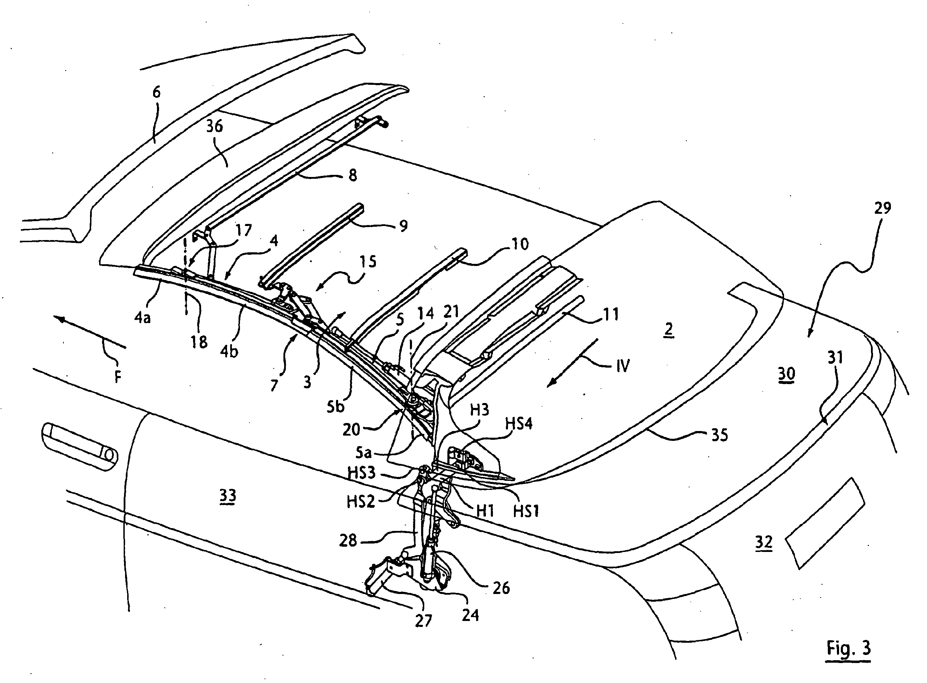

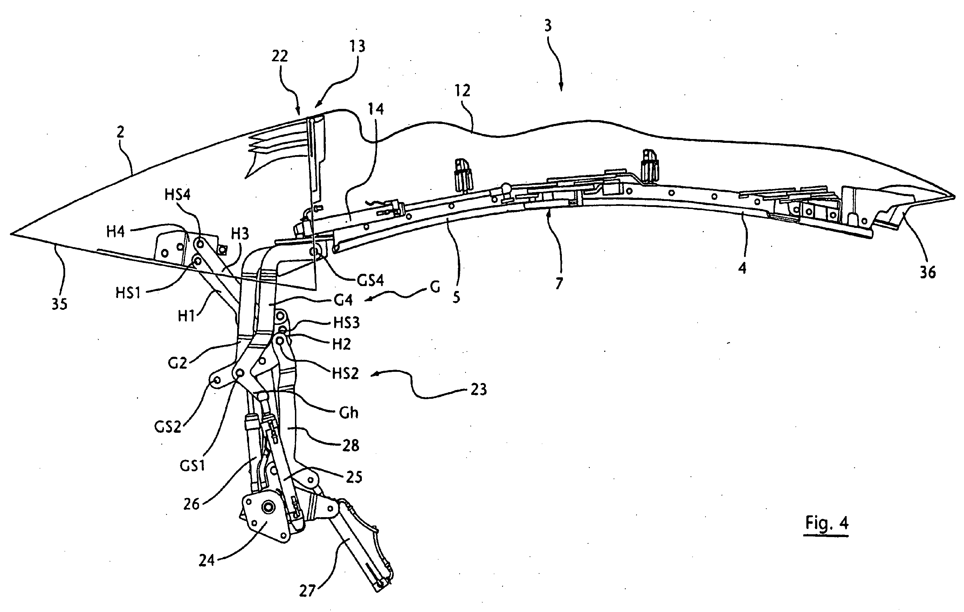

In einem ersten Schritt (Figuren 3 und 4) wird das hintere Dachteil 2 angehoben. Dieses Anheben kann als rein vertikale Hubbewegung stattfinden. Hierfür wird das hintere Antriebsorgan 26 ausgefahren. Dadurch, daß die Gelenke HS2 und HS3 zunächst durch den unbewegten Haupthebel 28 in einer karosseriefesten Position gehalten sind, wird durch das Antriebsorgan 26 das Viergelenk H derart geöffnet, das die Lenker H1 und H3 um die genannten Gelenke HS2 und HS3 aufschwenken, so daß die hinteren Gelenke HS1 und HS4, die an dem hinteren Dachteil 2 gehalten sind, vorwärts und aufwärts verschwenken. Das hintere Dachteil hebt dadurch um einige Zentimeter vom Dekkelteil 29 ab. Das Abheben ist durch das Gelenkparallelogramm als Kombinationsbewegung aus Hub- und Schwenkbewegung ausgebildet. Das Dachteil 2 wird dabei in geringem Maß über den flexiblen Dachbereich 3 geschoben, wodurch dessen Bezug 12 entspannen kann.

In dieser Stellung des hinteren Dachteils 2 kann der Verdeckkastendeckel 29 geöffnet werden. Hierfür wird dessen heckseitiges Teil 32 durch das oder die zugeordneten Antriebsorgane - nicht dargestellt - gegenüber der Karosserie 33 aufgeschwenkt. Durch die Kopplung des Teils 32 mit einem vorderen Teil 30 des Verdeckkastendeckels 29 wird dieses mit entgegen der Fahrtrichtung F gezogen. Dabei ist das vordere Ende des vorderen Teils 30 in einer Längsführungskulisse gehalten. Die Zugbewegung auf das vordere Teil 31 bewirkt daher gleichzeitig ein Anheben seiner vorderen Kante. Seine hintere Kante wird durch das Aufschwenken des hinteren Teils 32 deutlicher angehoben und gleichzeitig heckwärts unter dem hinteren Dachteil 2 weggezogen. In Anpassung hieran ist in dieser Bewegungsphase der umlaufende rückwärtige Rand 35 des hinteren Dachteils 2 leicht heckwärts aufwärts gestellt. Insgesamt muß zum Ermöglichen der Verdeckkastendeckelöffnung das hintere Dachteil 2 nur um ein geringes Maß angehoben werden. Die Gesamtbewegung ist dadurch beschleunigt.

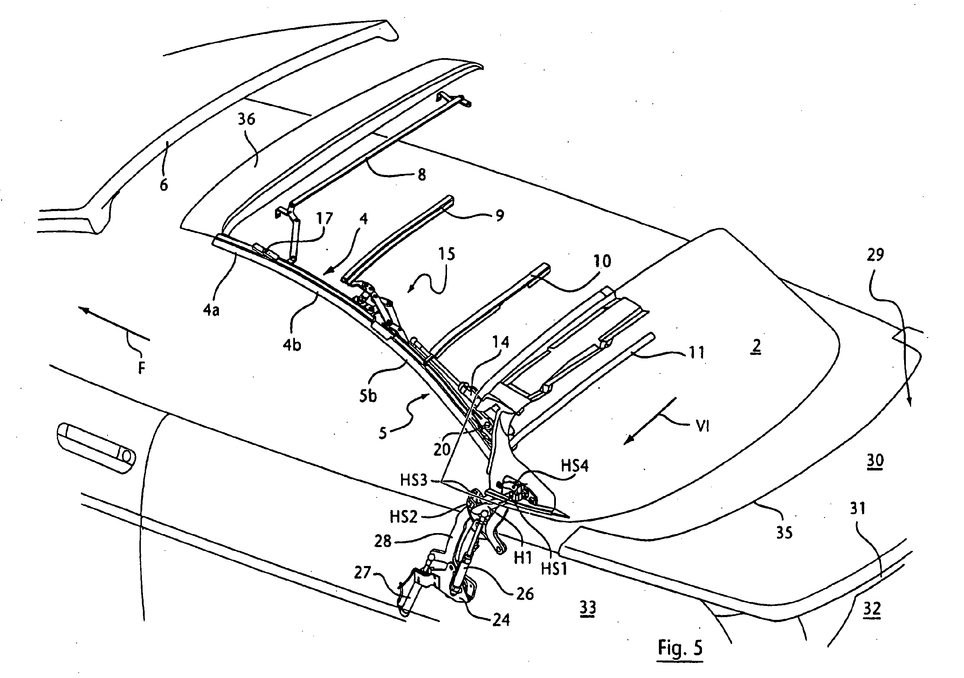

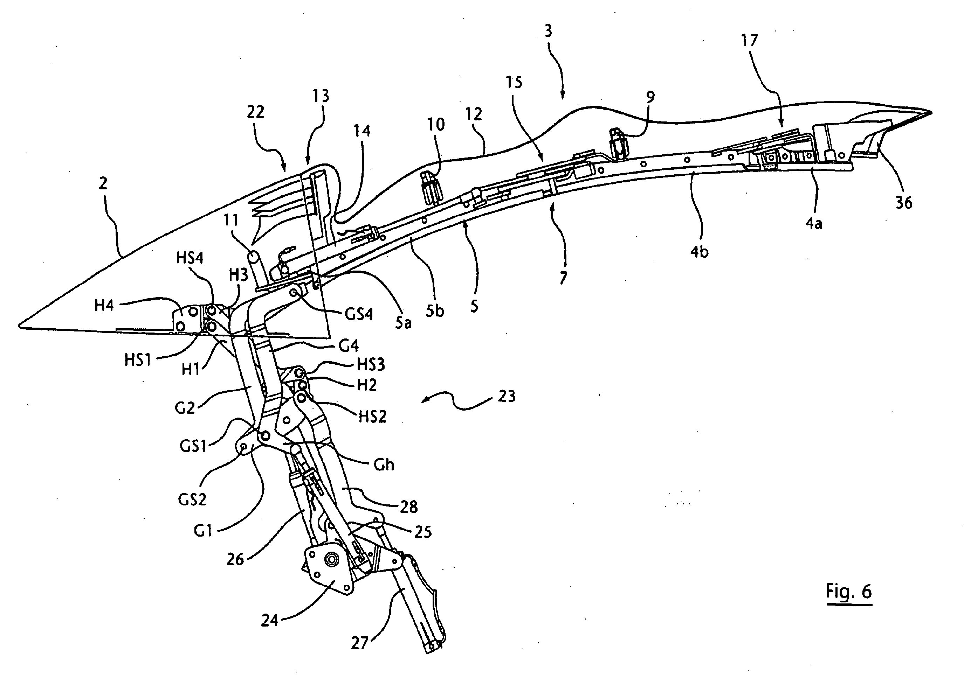

Zur weiteren Öffnung wird das Dach zunächst durch Betätigung des Antriebsorgans 27 über den Haupthebel 28 ein Stück weit heckwärts verschwenkt (Figuren 5 und 6), wodurch die Kopffreiheit für die Insassen vergrößert wird. Gleichzeitig wird der gesamte flexible Dachbereich 3 im noch nicht verkürzten Zustand durch Betätigung des Antriebsorgans 25 heckwärts in Richtung unter das hintere Dachteil 2 verlagert.

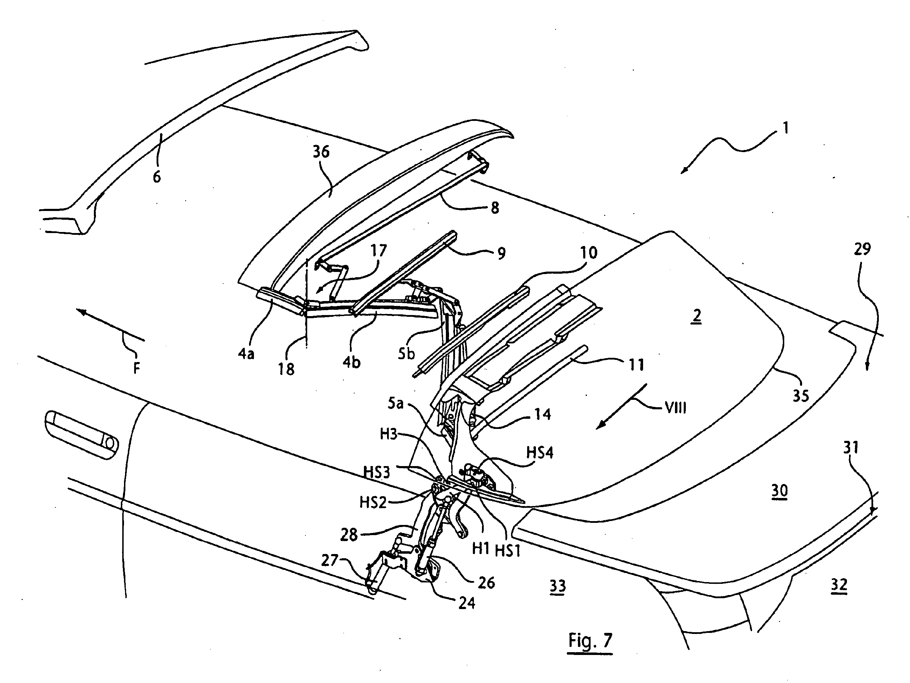

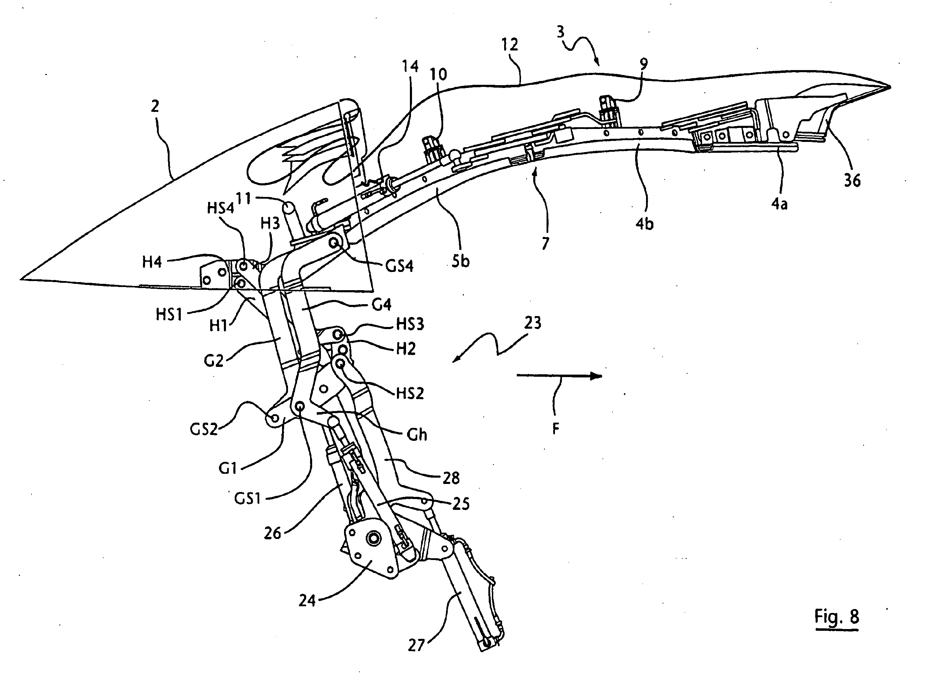

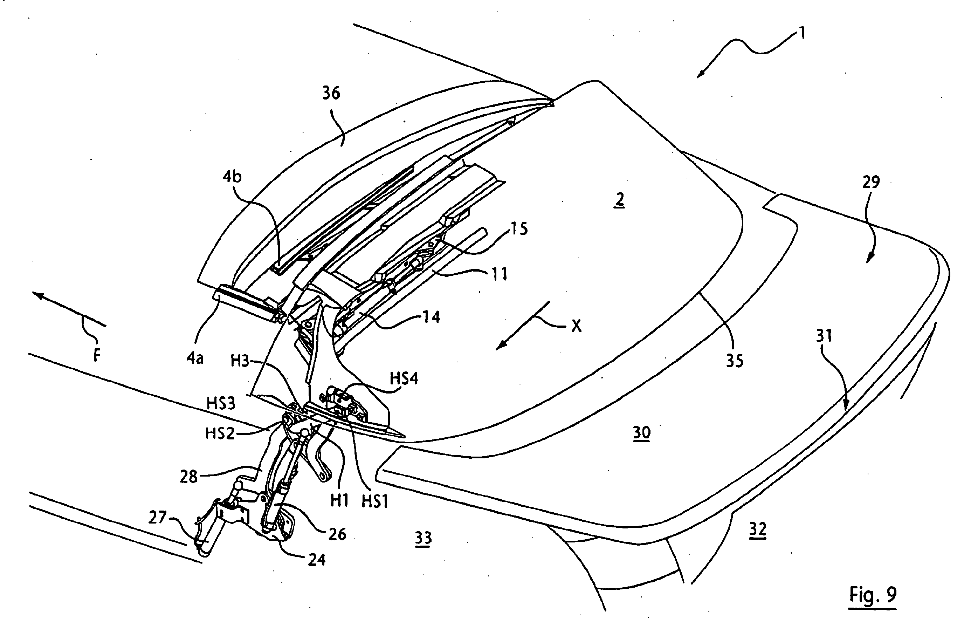

Aus dieser Position heraus beginnt die Einfaltbewegung des flexiblen Dachbereichs 3 (Figuren 7 bis 10). Dabei können die Antriebsorgane 25, 26 und 27 in konstanter Stellung verbleiben. Das im wesentlichen horizontal liegende Antriebsorgan 14 wird angezogen, wodurch das Gelenk 15, das im Ausführungsbeispiel als horizontal liegendes und um eine vertikale Achse schwenkbares Gelenk nach Art eines als Scherengitter ausgebildeten Siebengelenks ausgebildet ist, geöffnet wird. Dieses ist mit dem vorderen seitlichen Rahmenteil 4 sowie mit dem rückwärtigen Rahmenteil 5 jeweils im Nahbereich der Trennfuge 7 verbunden und übt auf diese ein Drehmoment aus. Dieses zieht die Abschnitte 4b und 5b in Richtung der vertikalen Fahrzeuglängsmittelebene 19 einwärts. Der Abschnitt 4b schwenkt dabei gegenüber dem vorderen, seine Längsorientierung beibehaltendem Abschnitt 4a um die vertikale Achse 18 des Gelenks 17 ein; der Abschnitt 5b des hinteren Rahmenteils 5 schwenkt dabei gegenüber seinem hinteren, seine Längsorientierung beibehaltendem Abschnitt 5a um die vertikale Achse 21 des Gelenks 20 ein.

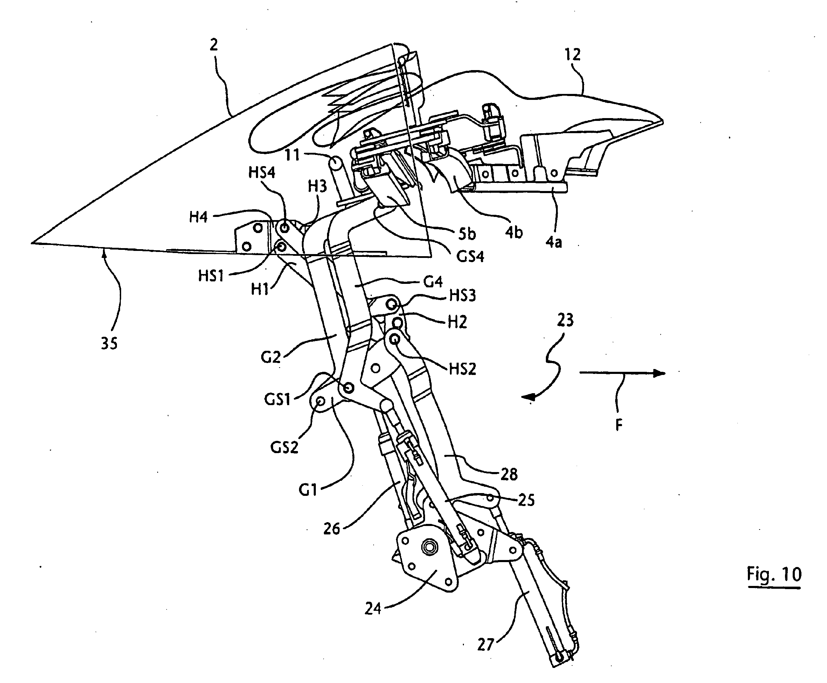

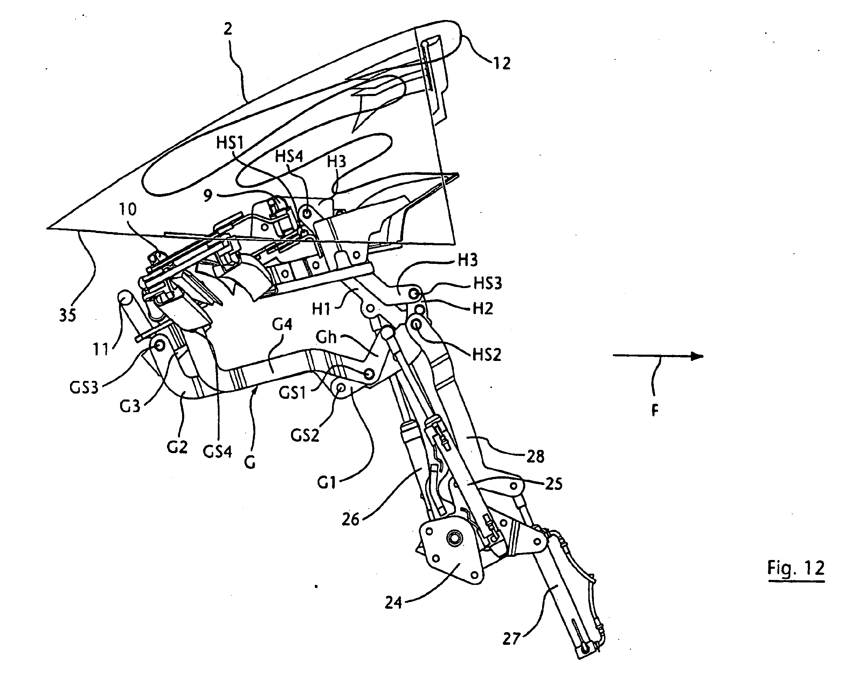

Bei der Verkürzung des flexiblen Dachbereichs 3 lösen sich die Spriegel 10, 11 von dem Dachbezug 12, so daß dieser gegenüber den ihn untergreifenden Teilen beweglich wird. Es können Zugbänder oder dergleichen Mittel - nicht dargestellt -vorgesehen sein, um eine Zwangseinfaltung des Bezuges 12 zu gewährleisten, wodurch dieser die beispielsweise in den Fig. 10 und 12 dargestellte Faltungsstruktur erreicht und während der Verkürzung des flexiblen Dachbereichs 3 sich in definierter Weise ohne Ausbildung von scharfen Knikken einfaltet.

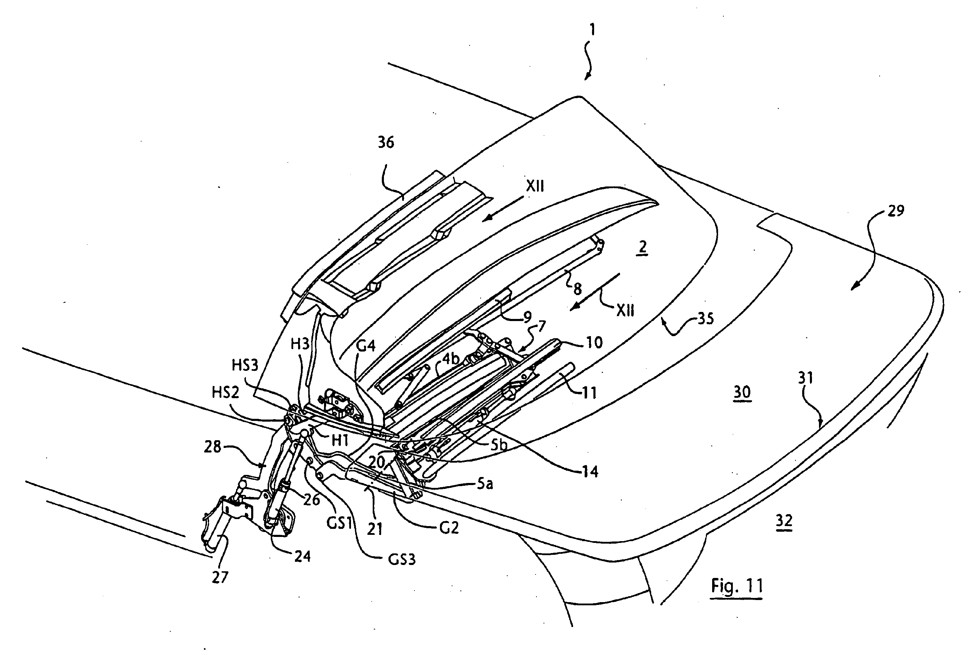

Die Abschnitte 4b, 5b werden durch das Antriebsorgan 14 derart weit um die Gelenke 17 bzw. 20 eingeschwenkt, daß sie am Ende der Dachverkürzung (Fig. 11, Fig. 12) sich im wesentlichen vollständig in Fahrzeugquerrichtung erstrecken. Die Teilungsfuge 7 liegt dann nahe der vertikalen Fahrzeuglängsmittelebene 19. Das Antriebsorgan 14 ist ebenfalls in eine quer zur Fahrtrichtung F weisende Stellung verschwenkt worden. Während der Verkürzung des flexiblen Dachbereichs 3 wird gleichzeitig durch Öffnen des Viergelenks G über das Antriebsorgan 25, das an dem Hebel Gh angreift und dadurch die Hebel G2 und G4 um die Gelenke GS1 und GS2 in eine im wesentlichen horizontale Position bringt, das rückwärtige Ende des flexiblen Dachbereichs 3 nach hinten gezogen, wodurch der hintere Spriegel 11 etwa in den Bereich der rückwärtigen Kante 35 des starren hinteren Dachteils 2 gelangt. Durch die Loslösung des Dachbezugs 12 kann dessen rückwärtiges Ende an der vorderen Kante des hinteren Dachteils 2 befestigt bleiben, ohne unter Spannung zu geraten (sh. Fig. 12).

Wie in Fig. 12 deutlich wird, ist die Längserstreckung des so gebildeten Pakets außerordentlich gering und ist im wesentlichen bestimmt durch das Längsausmaß des hinteren starren Dachteils 2. Der Dachbezug kann in seinen einzelnen Bereichen eng aufeinander liegen, ohne daß Spriegel oder dergleichen die Mindesthöhe des entstehenden Pakets begrenzen würden. Durch Absenkung des starren Dachteils 2 wird in dieser Phase der Bewegung die Höhe des anschließend abzulegenden Daches vermindert, es bildet sich ein flaches Paket.

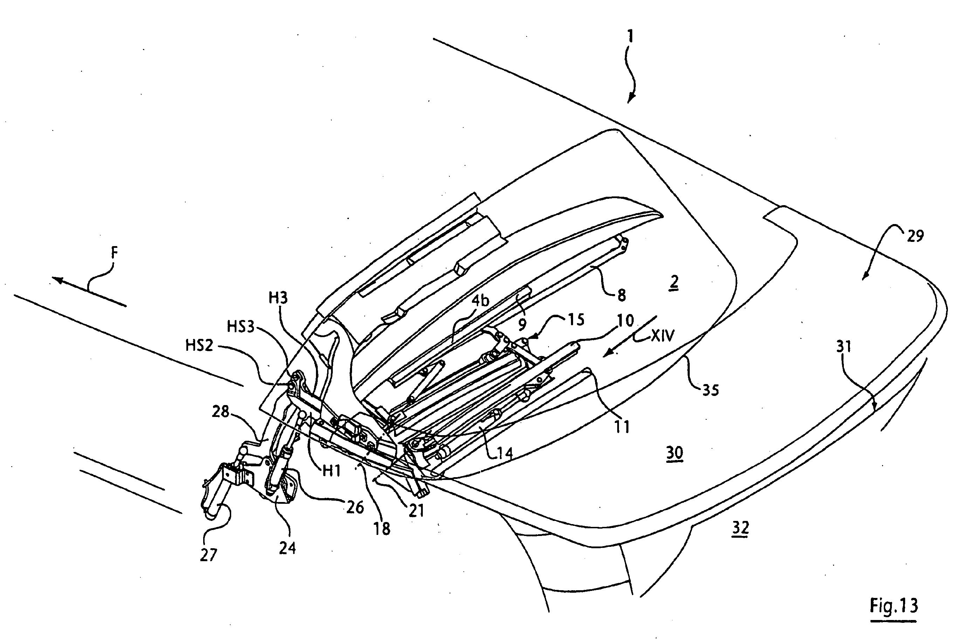

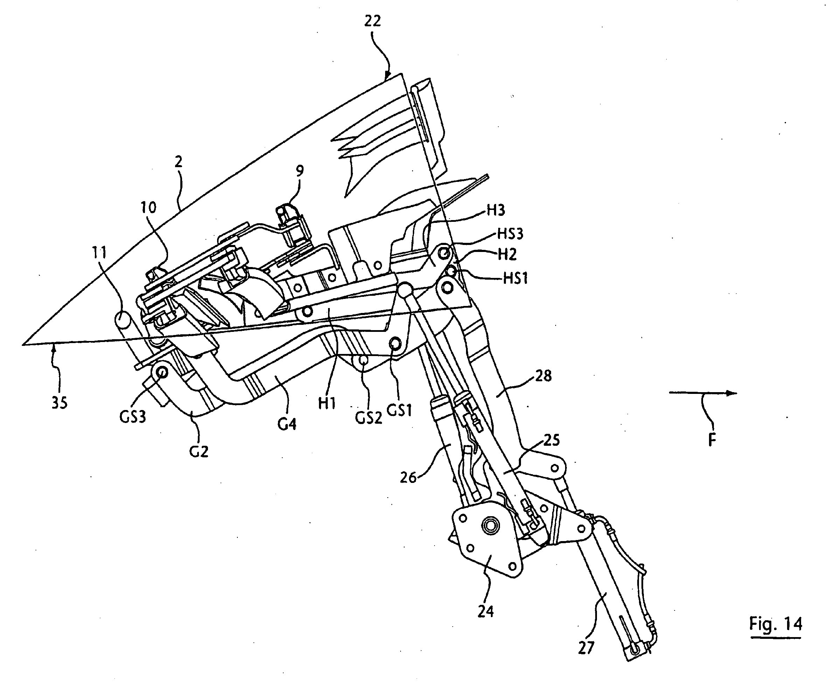

Das so entstandene Paket, das oberseitig von dem starren Dachteil 2 begrenzt ist, wird durch Ausfahren des Antriebsorgans 27 und damit verbundenes Aufschwenken des Haupthebels 28 in eine nahezu horizontale Stellung (Fig. 13 bis 16) rückwärtig verschwenkt und dabei unterhalb der Fensterbrüstungslinie derart abgelegt, daß auch in geschlossener Stellung das starre rückwärtige Dachteil das abgelegte Dach nach oben hin begrenzt. Gleichzeitig wird das Antriebsorgan 25, das direkt auf das Mehrgelenk G einwirkt, ein Stück weit eingefahren.

Insgesamt ist somit ein sehr kurzes und gleichzeitig in der Höhe minimiertes Paket entstanden, wodurch das abgelegte Dach im Kofferraum nur wenig Platz beansprucht und dieser nur geringfügig eingeschränkt ist.

Es versteht sich, daß die einzelnen Bewegungsphasen ohne Unterbrechungen unmittelbar hintereinander ablaufen und auch überlappen können, wodurch sich eine besonders schnelle Dachbewegung ergibt.

## Patentansprüche

1. Cabriolet-Fahrzeug (1) mit einem im rückwärtigen Fahrzeugbereich ablegbaren Dach, wobei das Dach zumindest bereichsweise (3) flexibel ausgebildet und der flexible Dachbereich (3) über eine mechanische Abstützung (4, 5, 8, 9, 10) gespannt ist, die zur öffnung des flexiblen Dachbereichs (3) dessen Verkürzung im wesentlichen parallel zur Fahrzeuglängserstreckung ermöglicht,
**dadurch gekennzeichnet,**
**daß** der flexible Dachbereich (3) zur Öffnung des Daches unterhalb eines starren Heckteils (2), in dem eine Heckscheibe enthalten ist, abgelegt und mit diesem abgesenkt wird.

2. Cabriolet-Fahrzeug (1) nach Anspruch 1,
**dadurch gekennzeichnet,**
**daß** die mechanische Abstützung (4, 5, 8, 9, 10) Bereiche umfaßt, die um vertikale Achsen einschwenkbar sind und dabei das vordere Dachende (36) parallel heckwärts verlagern.

3. Cabriolet-Fahrzeug (1) nach Anspruch 2,
**dadurch gekennzeichnet,**
**daß** der flexible Dachbereich in geschlossener Stellung über seitliche Rahmenteile (4, 5) gespannt ist und zumindest ein Teil (4b, 5b) dieser Rahmenteile (4, 5) bei Öffnung des Daches um vertikale Schwenkachsen (18, 21) verschwenkbar ist.

4. Cabriolet-Fahrzeug (1) nach Anspruch 3,
**dadurch gekennzeichnet,**
**daß** je Fahrzeugseite zumindest zwei Rahmenteile (4, 5) vorgesehen sind, die in geschlossenem Zustand fluchtend hintereinander liegen.

5. Cabriolet-Fahrzeug (1) Anspruch 4,
**dadurch gekennzeichnet,**
**daß** die seitlichen Rahmenteile (4, 5) jeweils eine Teilungsfuge (7) aufweise und an dieser um jeweils ein vertikales Gelenk (17, 20) einschwenkbar sind.

6. Cabriolet-Fahrzeug (1) nach einem der Ansprüche 1 bis 5,
**dadurch gekennzeichnet,**
**daß** die mechanische Abstützung (4, 5, 8, 9, 10) des Daches Synchronisationsmittel (8) zu seiner gleichmäßigen Verkürzung parallel zur Fahrzeuglängsrichtung umfaßt.

7. Cabriolet-Fahrzeug (1) nach einem der Ansprüche 1 bis 6,
**dadurch gekennzeichnet,**
**daß** eine Dachbespannung (12) zugmittel umfaßt, die eine vorbestimmte Einfaltung des sich verkürzenden flexiblen Dachbereichs (3) während der Dachöffnung bewirken.

8. Cabriolet-Fahrzeug (1) nach einem der Ansprüche 1 bis 7,
**dadurch gekennzeichnet,**
**daß** das Heckteil gegenüber der Fahrzeugkarosserie (33) zum Öffnen des Daches angehoben wird bevor der flexible Dachbereich (3) unterhalb des Heckteils (2) abgelegt wird.

9. Cabriolet-Fahrzeug (1) nach Anspruch 8,
**dadurch gekennzeichnet,**
**daß** der flexible Dachbereich (3) in einer ersten Bewegungsphase des Öffnungsschrittes bei fluchtend hintereinander stehenden Rahmenteilen (4, 5) ein Stück weit unter das Heckteil (2) verlagert wird und hierfür die Anbindung des flexiblen Dachbereichs (3) an das Heckteil (2) ein Reservoir an textiler Bespannung (12) umfaßt.

10. Cabriolet-Fahrzeug (1) nach Anspruch 9,
**dadurch gekennzeichnet,**
**daß** in einem zweiten Öffnungsschritt der Bewegung die Verkürzung des flexiblen Dachteils (3) durch Einschwenken der Rahmenteile (4,5) erfolgt.

11. Cabriolet-Fahrzeug (1) nach einem der Ansprüche 9 oder 10,
**dadurch gekennzeichnet,**
**daß** in einem letzten Öffnungsschritt der Bewegung das starre Heckteil (2) mit dem im wesentlichen darunter befindlichen, eingefahrenen flexiblen Dachbereich (3) vollständig unterhalb der Fensterbrüstungslinie der Karosserie (33) absenkbar ist.

12. Cabriolet-Fahrzeug (1) nach Anspruch 11,
**dadurch gekennzeichnet,**
**daß** in abgelegter Stellung des Daches das starre Heckteil (2) mit der Heckscheibe nach oben weist.

13. Cabriolet-Fahrzeug (1) nach Anspruch 12,
**dadurch gekennzeichnet,**
**daß** das Heckteil (2) vollständig als Glaskuppel ausgebildet ist.

## Claims

1. Convertible vehicle (1) with a top stowable in a rear part of the vehicle, wherein the top is at least partially (3) flexible formed und the flexible top part (3) is stretched across a mechanical support (4, 5, 8, 9, 10), which allows for opening the flexible top part (3) a shortening of the flexible top part in a direction substantially parallel to a longitudinal direction of the vehicle,
**characterized in that**
the flexible top part (3) for opening the top is stowed underneath a rigid rear part (2) comprising a rear window and is lowered with the rigid rear part.

2. Convertible vehicle (1) according claim 1, **characterized in that**
the mechanical support (4, 5, 8, 9, 10) comprises areas pivotable about vertical axes and thereby moving the front end (36) of the top parallel toward the rear of the vehicle.

3. Convertible vehicle (1) according claim 2, **characterized in that**
in the closed position, the flexible top part is stretched across lateral frame parts (4, 5) and at least one part (4b, 5b) of said frame parts (4, 5) is pivotable about vertical pivot axes (18, 21) when opening the top.

4. Convertible vehicle (1) according claim 3, **characterized in that**
each longitudinal side of the vehicle is provided with at least two frame parts (4, 5), which are aligned with each other in the closed state.

5. Convertible vehicle (1) according claim 4, **characterized in that**
the lateral frame parts (4, 5) each comprise a parting line (7) and are pivotable about a vertical hinge (17, 20) at the parting line.

6. Convertible vehicle (1) according to any one of claims 1 to 5, **characterized in that**
the mechanical support (4, 5, 8, 9, 10) of the top includes synchronizing means (8) for a uniformly shortening thereof in a direction parallel to the longitudinal direction of the vehicle.

7. Convertible vehicle (1) according to any one of claims 1 to 6, **characterized in that**
a covering (12) comprises pulling means that effect a predetermined folding of the flexible top part (3) being shortened during the opening of the top.

8. Convertible vehicle (1) according to any one of claims 1 to 7, **characterized in that**
for opening the top the rear part (2) is lifted relative to the car body (33) before the flexible top part (3) is stowed underneath the rear part (2).

9. Convertible vehicle (1) according claim 8, **characterized in that**
in a first movement phase of the opening step, the flexible top part (3) is moved a little under the rear part (2) when the frame parts (4, 5) are aligned with each other, and therefore, the connection of the flexible top part (3) to the rear part (2) includes a reservoir of textile covering (12).

10. Convertible vehicle (1) according claim 9, **characterized in that**
in a second opening step of the movement, the shortening of the flexile top part (3) is carried out by pivoting the frame parts (4, 5).

11. Convertible vehicle (1) according claim 9 or 10, **characterized in that**
in a last opening step of the movement, the rigid rear part (2) with the retracted flexible top part (3) that is substantially stowed underneath the rigid top part, can be lowered completely below the window sill line of the car body (33).

12. Convertible vehicle (1) according claim 11, **characterized in that**
in the stowed position of the top, the rigid rear part (2) with the rear window faces upwards.

13. Convertible vehicle (1) according claim 12, **characterized in that**
the rear part (2) is formed completely as a glass dome.

## Revendications

1. Véhicule convertible (1) comportant un toit se rangeant dans la zone arrière du véhicule,
le toit étant au moins souple par zone (3) et la zone souple (3) du toit est tendue par l'intermédiaire d'un appui mécanique (4 ; 5 ; 8 ; 9 ; 10), qui permet de raccourcir l'ouverture de la zone de toit souple (3), pratiquement parallèlement à la direction longitudinale du véhicule,
**caractérisé en ce que**
pour ouvrir le toit, la zone souple (3) se loge sous une partie arrière rigide (2) comportant la lunette arrière, et cette zone souple est abaissée avec cette partie.

2. Véhicule convertible (1) selon la revendication 1,
**caractérisé en ce que**
l'appui mécanique (4 ; 5 ; 8 ; 9 ; 10) comprend des zones qui peuvent pivoter autour d'axes verticaux et permettent ainsi de déplacer l'extrémité avant (36) du toit parallèlement vers l'arrière.

3. Véhicule convertible (1) selon la revendication 2,
**caractérisé en ce que**
en position fermée la zone souple du toit est tendue par l'intermédiaire de parties de cadre (4 ; 5) latérales, et au moins l'une (4b ; 5b) de ces parties de cadre (4 ; 5) pivote autour d'axes de pivotement verticaux (17 ; 21) lorsqu'on ouvre le toit.

4. Véhicule convertible (1) selon la revendication 3,
**caractérisé en ce que**
chaque côté du véhicule comporte au moins deux parties de cadre (4 ; 5) alignées l'une par rapport à l'autre à l'état fermé.

5. Véhicule convertible (1) selon la revendication 4,
**caractérisé en ce que**
les parties latérales de cadre (4 ; 5) comportent chacune un intervalle de liaison (7), et elles peuvent être pivotées dans le sens rentrant au niveau de cet intervalle chaque fois autour de un axe vertical (17 ; 20).

6. Véhicule convertible (1) selon les revendications 1 à 5,
**caractérisé en ce que**
l'appui mécanique (4 ; 5 ; 8 ; 9 ; 10) du toit comporte des moyens de synchronisation (8) pour le raccourcir simultanément, de façon parallèle à la direction longitudinale du véhicule.

7. Véhicule convertible (1) selon les revendications 1 à 6,
**caractérisé en ce que**
la couverture (12) du toit comporte des moyens de traction permettant un dépliage prédéfini de la zone souple (3) qui se raccourcit au cours du mouvement d'ouverture.

8. Véhicule convertible (1) selon les revendications 1 à 7,
**caractérisé en ce que**
la partie arrière (2) est relevée par rapport à la carrosserie (33) du véhicule pour ouvrir le toit avant que la zone souple (3) ne soit déposée sous la partie arrière (2).

9. Véhicule convertible (1) selon la revendication 8,
**caractérisé en ce que**
la zone souple (3) du toit, dans une première phase de mouvement de l'étape d'ouverture, lorsque les parties de cadre (4 ; 5) sont alignées l'une derrière l'autre, est déplacée plus loin sous la partie arrière (2) et à cet effet la fixation de cette partie souple (3) à la partie arrière (2) comporte une réserve de couverture textile (12).

10. Véhicule convertible (1) selon la revendication 9,
**caractérisé en ce que**
dans une seconde étape d'ouverture du mouvement, le raccourcissement de la partie souple (3) se fait par le basculement rentrant des parties de cadre (4 ; 5).

11. Véhicule convertible (1) selon la revendication 9 ou 10,
**caractérisé en ce que**
dans la dernière étape d'ouverture du mouvement, la partie arrière rigide (2) s'abaisse avec la zone souple (3), rentrée, qui se trouve pratiquement en dessous de celle-ci, complètement en dessous de la ligne d'appui de fenêtre de la carrosserie (33).

12. Véhicule convertible (1) selon la revendication 11,
**caractérisé en ce qu'**
en position abaissée du toit, la partie arrière rigide (2) avec la lunette arrière est tournée vers le haut.

13. Véhicule convertible (1) selon la revendication 12,
**caractérisé en ce que**
la partie arrière (2) est réalisée complètement sous la forme d'un dôme en verre.
